# EUROPÄISCHE PATENTSCHRIFT

(11) **EP 0 564 535 B1**
(45) Veröffentlichungstag und Bekanntmachung des Hinweises auf die Patenterteilung: **08.11.1995**
(21) Anmeldenummer: 92902196.2
(22) Anmeldetag: 21.12.1991
(51) Int. Cl.: E21B 47/022, G01C 15/00

(54) **BESTIMMUNG DER RELATIVEN POSITION VON MESSPUNKTEN**
DETERMINATION OF THE RELATIVE POSITION OF MEASUREMENT POINTS
DETERMINATION DE LA POSITION RELATIVE DE POINTS DE MESURE

(30) Priorität: 24.12.1990 DE 4041723
(43) Veröffentlichungstag der Anmeldung: 13.10.1993
(73) Patentinhaber: Thiedig, Ullrich, Dipl.-Ing., D-38118 Braunschweig (DE); Wente, Holger, Dipl.-Ing., D-38108 Braunschweig (DE); KÖSTER, Bernd, Dr., D-38102 Braunschweig (DE)
(72) Erfinder: Thiedig, Ullrich, Dipl.-Ing., D-38118 Braunschweig (DE); Wente, Holger, Dipl.-Ing., D-38108 Braunschweig (DE); KÖSTER, Bernd, Dr., D-38102 Braunschweig (DE)
(74) Vertreter: Lins, Edgar, Dipl.-Phys. Dr.jur.
(86) Internationale Anmeldenummer: DE9101017
(87) Internationale Veröffentlichungsnummer: WO9211442

(56) Entgegenhaltungen:
- EP-A- 0 149 690
- WO-A-84/03121
- DE-C- 3 305 089
- US-A- 4 047 306
- US-A- 4 291 978
- US-A- 4 904 081

## Beschreibung

Die Erfindung betrifft ein Verfahren zur Bestimmung der Position eines Meßpunktes relativ zu einem Bezugspunkt, insbesondere zur Steuerung und oder Kontrolle des Vortriebs einer Bohrung, unter Verwendung wenigstens zweier Kameras und wenigstens zweier Zielmarkierungen durch Auswertung der Bildinhalte der Kameras. Die Erfindung betrifft ferner eine Vorrichtung zur Durchführung des Verfahrens.

Das Problem einer derartigen Positionsbestimmung stellt sich insbesondere bei der Durchführung unterirdischer Bohrungen, wenn gleichzeitig ein Rohrvortrieb mit der Bohrung ausgeführt wird. Eine Abweichung des Bohrkopfes von der Sollrichtung führt dabei sofort zu einer entsprechenden Abweichung der Verrohrung. Es ist deshalb erforderlich, Positionsbestimmungen in kurzen Abständen vorzunehmen oder vorzugsweise den Bohrvortrieb kontinuierlich zu überwachen und in Abhängigkeit von den ermittelten Meßwerten zu steuern. Eine Übersicht über die hierfür bekannten Meß- und Steuerverfahren enthält der Aufsatz "Meß- und Steuertechnik beim unterirdischen Rohrvortrieb" in der Zeitschrift TIS 1986, Seite 67 bis 77. Demgemäß ist es bekannt, an der Vortriebsmaschine eine Zieltafel anzubringen, die von einem außerhalb des Schachtes angeordneten Laser angestrahlt wird. Eine Abweichung des Auftreffpunktes des Laserstrahls von der Sollposition kann durch eine Korrektur der Vortriebsrichtung ausgeglichen werden. Voraussetzung für eine derartige Vortriebsrichtungsbestimmung ist ein freier optischer Weg über die gesamte Rohrlänge. Da der Laserstrahl mit zunehmendem Vortrieb lange Rohrstrecken überbrücken muß, kann es durch temperaturbedingte Luftschichtungen zu Ablenkungen des Laserstrahls kommen, die einen Meßfehler verursachen. Aufgrund der nicht vermeidbaren geringen Divergenz eines Laserstrahls weitet sich der Laserfleck mit zunehmender Entfernung der Zieltafel vom Laser auf, wodurch die Auswertung des Laserflecks bezüglich seines Schwerpunktes erschwert wird.

Es ist ferner bekannt, die Vermessung in der Rohrstrecke mit einem Theodoliten durchzuführen. Dabei kann der Theodolit mit zwei Zieltafeln zusammenwirken, nämlich mit einer Zieltafel in Bohrrichtung ("vorwärtsschauend") und mit einer Zieltafel in entgegengesetzter Richtung ("rückwärtsschauend"). Hierzu muß der Theodolit geschwenkt werden.

Ausgehend von dem beschriebenen Vermessungsprinzip mit dem Theodoliten ist ein Meßverfahren mit zwei Halbleiterkameras entwickelt worden, die miteinander gekoppelt sind und in derselben optischen Achse in entgegengesetzte Richtungen blicken. Die vorwärtsblickende Kamera peilt eine Zieltafel am Vortriebskopf an, während die rückwärtsblickende Kamera eine Referenz-Zieltafel in der bereits durchgeführten Verrohrung überwacht. Bei jeder Messung werden die Bilder beider Zieltafeln von den Kameras aufgenommen, in einen Rechner eingespeist und von diesem mit den Bildern, die in der vorangegangenen Phase aufgenommen und abgespeichert wurden, verglichen. Unter Berücksichtigung der Positionsänderung der Kamera und der Verrollung des Rohres und damit des Kamerastandortes, die durch zwei orthogonal angeordnete Inklinometer gemessen werden, wird die Lage der vorderen Zieltafel und damit auch der Vortriebsmaschine berechnet. Der erforderlichen Bestimmung des Kamerastandortes kommt somit eine erhebliche Bedeutung zu. Eine kontinuierliche und automatische Überwachung des Vortriebs ist somit nicht möglich.

Der Erfindung liegt die Aufgabe zugrunde, eine neuartige Bestimmung der Position eines Meßpunktes relativ zu einem Bezugspunkt anzugeben, die auch eine kontinuierliche und automatische Positionsüberwachung und -steuerung erlaubt.

Zur Lösung dieser Aufgabe ist das Verfahren der eingangs erwähnten Art erfindungsgemäß dadurch gekennzeichnet, daß die Zielmarkierungen in einer festen räumlichen Anordnung zu jeweils einer Kamera angeordnet werden und eine definierte geometrische Struktur aufweisen und daß die Kameras so angeordnet werden, daß sich jeweils zwei gegenseitig im Blickfeld befinden.

Die erfindungsgemäße Vermessung findet somit mit zwei Kameras statt, die sich gegenseitig im Blickfeld haben, wobei jede Kamera die der anderen Kamera räumlich zugeordnete Zielmarkierung abbildet. Die eine definierte geometrische Struktur aufweisende Zielmarkierung erlaubt die Richtungsbestimmung für den die beiden Kameras verbindenden Vektor durch eine Auswertung der Verzerrung des Bildes der Zielmarkierung, wenn die Schwerpunkte ihrer Bilder außerhalb der optischen Achse der aufnehmenden Kamera liegen. Die gleiche Bestimmung ist möglich, wenn aus dem Bild der geometrischen Struktur der Zielmarkierung ein Meßpunkt bestimmt wird, der zur Bestimmung des von dem Bezugspunkt zur Zielmarkierung zeigenden Vektors verwendet wird. Dabei kann der Meßpunkt beispielsweise durch eine Schwerpunktermittlung des Bildes der Zielmarkierung ermittelt werden.

Die Ermittlung des Meßpunktes ist mit einer Subpixelgenauigkeit möglich. Die Genauigkeit kann noch dadurch gesteigert werden, daß für die Ermittlung des Meßpunktes nur Bildpunkte verwendet werden, deren Grauwerte in einem vorgewählten Bereich liegen. Zur weiteren Erhöhung der Genauigkeit kann die Bestimmung des Meßpunktes für verschiedene Grauwertbereiche vorgenommen werden.

Das erfindungsgemäße Verfahren erlaubt die Bestimmung der Position eines Meßpunktes relativ zu einem Bezugspunkt auch bei einer längeren gekrümmten Bohrung durch eine mehrfache Positionsbestimmung in einem Polygonzug. Die Positionsbestimmung in der gekrümmten Bohrung wird durch aneinandergereihte geradlinige Abschnitte vorgenommen.

Zusätzlich zu der optischen Auswertung mit den Bildern der beiden sich gegenseitig im Blickfeld habenden Kameras kann eine Entfernungsmessung durchgeführt werden, um die Positionsbestimmung zu vervollständigen. Es ist aber auch möglich, bei einer vorgegebenen Brennweite der Kameras die Entfernungsmessung durch die Bestimmung der Größe des scharf abgebildeten Bildes der Zielmarkierung vorzunehmen. Die Bestimmung der Schärfe und gegebenenfalls die Größe des Bildes kann dabei durch Auswertung der Ortsfrequenz Anteil der transformierten Grauabstufungen vorgenommen werden. Unterzieht man die Grauwertabstufungen einer Fourrier-Transformation, entsprechen die Änderungen der Grauwerte Frequenzwerten. Durch Detektion höher frequenter Anteile kann festgestellt werden, ob eine gewünschte Schärfe der Abbildung vorliegt. Durch Ermittlung der höher frequenten Anteile kann auch die Größe des Bildes nach einem definierten Kriterium festgestellt werden.

Die oben erwähnte Aufgabe wird ferner mit einer Vorrichtung gelöst, bei der die Zielmarkierung in einer festen räumlichen Anordnung zu jeweils einer Kamera angeordnet sind und die zwei Kameras so angeordnet sind, daß sie sich gegenseitig im Blick feld befinden. Dabei sind die Zielmarkierungen vorzugsweise geometrische Figuren mit einem definierten Schwerpunkt, wobei sich vorzugsweise der Schwerpunkt der geometrischen Figur in der optischen Achse der zugehörigen Kamera befindet.

In einer besonders bevorzugten Ausführungsform ist die geometrische Figur dadurch gebildet, daß jede Kamera einen ihre Optik konzentrisch umgebenden Leuchtring aufweist. Der Leuchtring kann vorzugsweise durch ein lichtleitendes Rohr gebildet sein, an dessen kamerafernen Ende eine Mehrzahl von Leuchtelementen, vorzugsweise Leuchtdioden, angeordnet ist. Über die Wandung des lichtleitenden Rohres verteilen sich die Leuchtintensitäten der Leuchtelemente zu einem im wesentlichen homogen strahlenden Ring.

In einer alternativen Ausführungsform wird die Zielmarkierung dadurch realisiert, daß jede Kamera einen optischen Strahler in einer fixierten räumlichen Anordnung zu der Kamera und eine im Blickfeld der Kamera angeordnete Mattscheibe aufweist, die von dem optischen Strahler der anderen Kamera zur Bildung der Zielmarkierung angestrahlt wird. Da die Mattscheibe von der Kamera betrachtet wird, zu der sie ein festes räumliches Verhältnis hat, gestaltet sich die Optik der Kamera sehr einfach und es liegen immer gleiche Abbildungsverhältnisse vor. Als optische Strahler werden hierbei vorzugsweise Laser verwendet.

Besonders bevorzugt ist eine Anordnung, bei der eine vorwärtsschauende Kamera an einem Bezugspunkt angeordnet ist und sich eine rückwärtsschauende Kamera an der Vortriebsvorrichtung befindet. In diesem Fall ist die erfindungsgemäße Vorrichtung vorzugsweise mit einer Station mit zwei starr miteinander verbundenen Kameras versehen, deren Blickfelder mit derselben optischen Achse in entgegengesetzten Richtungen ausgerichtet sind und die sich jeweils bei einer ihnen zugeordneten, entfernten und in ihrem Blickfeld befindlichen Kamera im Blickfeld befinden. Die entfernten Kameras können dabei durch die Kamera an der Vortriebsvorrichtung und an dem Bezugspunkt gebildet sein.

Es kann zweckmäßig sein, wenigstens eine Kamera bezüglich wenigstens eines Winkels verstellbar auszubilden, wobei der Verstellwert elektrisch erfaßbar ist und somit für die Auswertung berücksichtigt werden kann. Hierdurch ist es möglich, bei gekrümmten Bohrungen auch größere Abstände vorzusehen, weil beispielsweise die Referenzkamera um einen bestimmten Winkel in Richtung der Krümmung gedreht werden kann und so über eine größere Strecke eine in Richtung des Bohrfortschritts vorn liegende Kamera im Blickfeld haben kann. Die Winkelbestimmung muß dabei mit einer erheblichen Genauigkeit vorgenommen werden. Dies kann beispielsweise durch die Verstellung mit einem Winkel-Inkrementalgeber erreicht werden.

Die Erfindung soll im folgenden anhand eines in der Zeichnung dargestellten Ausführungsbeispieles näher erläutert werden.

Es zeigen:
- Figur 1: - eine schematische Darstellung einer Anordnung mit drei Meßstationen
- Figur 2: - eine schematische Darstellung zur Verdeutlichung von Vektoren, deren Summe zur Positionsbestimmung führt
- Figur 3: - eine schematische Darstellung einer alternativen Ausführungsform für Zielmarkierungen bei zwei Meßstationen.

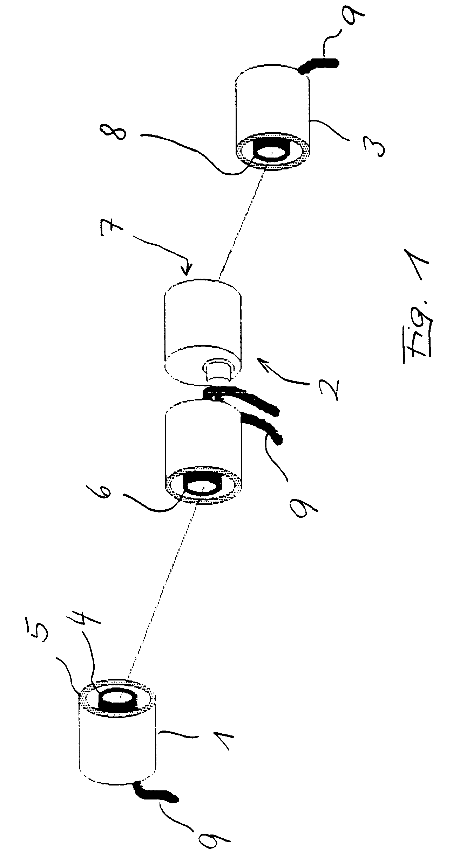

In der Darstellung der Figur 1 befindet sich eine erste Meßstation 1 in einer bezüglich Ort und Ausrichtung definierten Lage. Die Positionsbestimmung kann durch vorherige Meßungen nach dem erfindungsgemäßen Verfahren oder in herkömmlicher Weise erfolgt sein.

Eine zweite Meßstation 2 ist als Doppel-Meßstation ausgebildet und befindet sich in Richtung Bohrfortschritt vor der ersten Meßstation 1. Eine dritte Meßstation 3 ist am Bohrkopf der Bohrvortriebsmaschine angeordnet und, wie die erste Meßstation 1, als Einfach-Meßstation ausgebildet.

Die Meßstationen weisen jeweils Kameras 4 auf, deren Objektiv konzentrisch von einem zylindrischen, vorn durchsichtigen Gehäuse 5 umgeben ist, dessen vordere Gehäusekante als zur optischen Achse der Kamera konzentrischer Leuchtring ausgebildet ist. Die in Richtung Bohrfortschritt schauende Kamera 4 der ersten Meßstation befindet sich im Blickfeld einer rückwärtsschauenden Kamera 6 der Doppel-Meßstation 2. In gleicher Weise haben sich eine vorwärtsschauende Kamera 7 der Doppel-Meßstation 2 und eine rückwärtsschauende Kamera 8 in der Meßstation 3 am Bohrkopf gegenseitig im Blickfeld.

Aufgrund der in der Regel unterschiedlichen Ausrichtung der optischen Achsen der einander anschauenden Kameras 4, 6 und 7, 8 erscheinen die Leuchtringe 5 auf dem Bildschirm der den Leuchtring 5 aufnehmenden Kamera verzerrt. Die gewünschte Richtungsbestimmung, für den die beiden Meßstationen verbindenden Vektor könnte analytisch aus der Verzerrung ermittelt werden. Es ist jedoch einfacher, lediglich eine Schwerpunktsbestimmung des Bildes des Leuchtringes vorzunehmen. Durch die gegenseitige Bestimmung der Schwerpunkte durch die beiden sich anschauenden Kameras 4, 6 bzw. 7, 8 ist die Ermittlung des Richtungsvektors zwischen den Mittelpunkten der Leuchtringe 5 ohne weiteres möglich.

Zur Durchführung der Auswertungen sind die Kameras 4, 6, 7, 8 der Meßstationen 1, 2, 3 jeweils mit einem Anschluß 9 für einen Rechner verbunden.

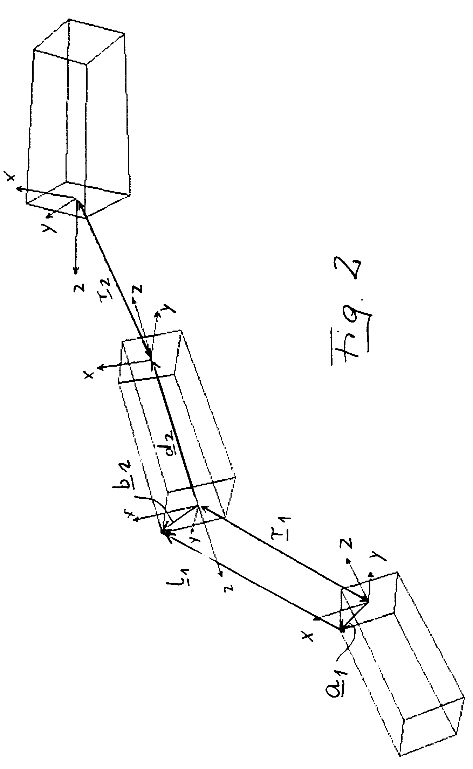

Wie Figur 2 verdeutlicht, werden die Vektoren r₁ und r₂ dadurch ermittelt, daß sich die Bildparameter durch eine Drehung - ausgedrückt in Kugelkoordinaten - ineinander überführen lassen. Zu den ermittelten Vektoren r₁ und r₂ ist der Systemparameter D2 hinzuzuaddieren, der den Abstand zwischen den durch die Mittelpunkte der Leuchtringe 5 definierten Zielpunkte in der Doppel-Meßstation 2 charakterisiert.

Durch die Schwerpunktsbestimmung der Bilder der sich einander anschauenden Kameras 4, 6 und 7, 8 läßt sich zunächst nur die Richtung des Vektors r₁ bzw. r₂ bestimmen, jedoch noch nicht sein Betrag. Hierfür ist eine Berücksichtigung des Abstandes zwischen den Zielpunkten erforderlich. Werden die Meßstationen 1, 2, 3 jeweils in genau vorbestimmten Abständen zueinander montiert, kann eine Abstandsbestimmung gegebenenfalls entfallen. In der Regel wird die Abstandsbestimmung wegen der Ungenauigkeiten beim Montieren der Meßstationen 1, 2, 3, wegen des Spiels zwischen den aneinanderstoßenden Ringen der Tunnelverrohrung und insbesondere bei einer Messung über eine Zwischenpresstation hinweg jedoch erforderlich sein. Die Abstandsbestimmung kann dann durch eine Messung der Größe des scharf abgebildeten Bildes des jeweiligen Leuchtringes 5 vorgenommen werden, wenn die hierfür erforderliche Brennweite festgestellt wird. Es ist aber auch möglich, spezielle Distanzmeßpunkte vorzusehen, wie dies in Figur 2 angedeutet ist. Die Distanzmeßpunkte stehen in einer vorbestimmten räumlichen Beziehung zu den Zielpunkten. Ihr Abstand l₁ kann ebenfalls durch Bildauswertung oder aber durch herkömmliche Abstandsmeßverfahren (Ultraschall usw.) bestimmt werden.

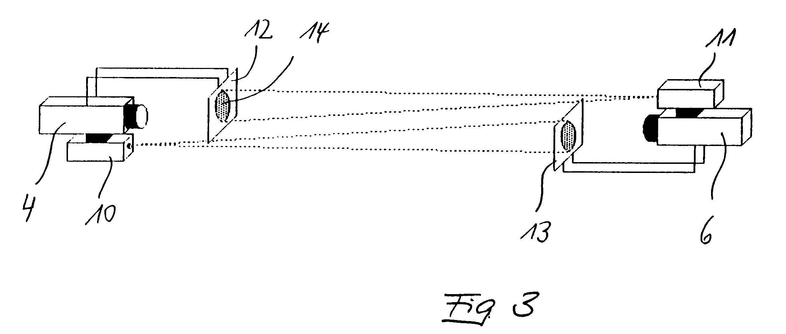

Bei der in Figur 3 dargestellten Anordnung sind den Kameras 4,6 jeweils ein Laser 10,11 räumlich fixiert zugeordnet. Darüber hinaus befindet sich vor jeder Kamera 4,6 jeweils eine Mattscheibe 12,13, die von dem Laser 11,10 der jeweils anderen Kamera 4,6 angestrahlt wird, so daß auf der Mattscheibe 12,13 ein Bild 14 durch den Auftreffpunkt des der anderen Kamera 4,6 zugeordneten Lasers 10,11 entsteht. Senden die Laser 10,11 einen im Querschnitt kreisrunden Strahl aus, wird dieser beim schrägen Auftreffen auf die jeweilige Mattscheibe 12,13 eliptisch verformt, so daß durch Bildauswertung des Auftreffbildes 14 auf der Mattscheibe 12,13 die Lageinformation erhalten werden kann.

Es ist ohne weiteres ersichtlich, daß das erfindungsgemäße Verfahren die Einfügung einer Doppel-Meßstation 2 nicht erfordert sondern iterativ mit den Einfach-Meßstationen 1 und 3 ausge-führt werden kann. Ebenso ist klar, daß statt einer Doppel-Meßstation 2 auch mehrere Doopel-Meßstationen 2 Verwendung finden können, um längere Streckenabschnitte automatisch zu vermessen.

## Patentansprüche

1. Verfahren zur Bestimmung der Position eines Meßpunktes relativ zu einem Bezugspunkt, insbesondere zur Steuerung und/oder Kontrolle des Vortriebs einer Bohrung, unter Verwendung wenigstens zweier Kameras (4, 6, 7, 8) und wenigstens zweier Zielmarkierungen (5) durch Auswertung der Bildinhalte der Kameras (4, 6, 7, 8), **dadurch gekennzeichnet, daß** die Zielmarkierungen (5) in einer festen räumlichen Anordnung zu jeweils einer Kamera (4, 6, 7, 8) angeordnet werden und eine definierte geometrische Struktur aufweisen und daß die Kameras (4, 6, 7, 8) so angeordnet werden, daß sich jeweils zwei gegenseitig im Blickfeld befinden und die gegenseitige geometrische Lage durch Auswertung der jeweils abgebildeten geometrischen Struktur bestimmt wird.

2. Verfahren nach Anspruch 1, dadurch gekennzeichnet, daß die Bestimmung des den Meßpunkt mit dem Bezugspunkt verbihdenden Vektors durch Auswertung der Verzerrungen der Bilder der Zielmarkierungen (5) erfolgt, wenn die Schwerpunkte ihrer Bilder außerhalb der optischen Achse der aufnehmenden Kamera (4, 6, 7, 8) liegen.

3. Verfahren nach Anspruch 1, dadurch gekennzeichnet, daß aus dem Bild der geometrischen Struktur der Zielmarkierung (5;10,11) ein Meßpunkt bestimmt wird, der zur Bestimmung des von dem Bezugspunkt zur Zielmarkierung zeigenden Vektors r₁, und r₂ verwendet wird.

4. Verfahren nach Anspruch 3, dadurch gekennzeichnet, daß der Meßpunkt durch eine Schwerpunktsermittlung des Bildes der Zielmarkierung ermittelt wird.

5. Verfahren nach Anspruch 3 oder 4, dadurch gekennzeichnet, daß für die Ermittlung des Meßpunktes nur Bildpunkte verwendet werden, deren Grauwerte in einem vorgewählten Bereich liegen.

6. Verfahren nach Anspruch 5, dadurch gekennzeichnet, daß für verschiedene Grauwertbereiche die Bestimmung des Meßpunktes vorgenommen wird.

7. Verfahren nach einem der Ansprüche 1 bis 6, dadurch gekennzeichnet, daß die Position eines Meßpunktes relativ zu einem Bezugspunkt bei einer gekrümmten Bohrung durch eine mehrfache Positionsbestimmung in einem Polygonzug vorgenommen wird.

8. Verfahren nach einem der Ansprüche 1 bis 7, dadurch gekennzeichnet, daß zusätzliche eine Entfernungsmessung vorgenommen wird.

9. Verfahren nach einem der Ansprüche 1 bis 7, dadurch gekennzeichnet, daß eine Entfernungsmessung durch eine Auswertung der Abbildungsbedingungen für die scharf abgebildete Zielmarkierung (5) vorgenommen wird.

10. Verfahren nach Anspruch 9, dadurch gekennzeichnet, daß die Entfernungsmessung durch eine Auswertung der Größe der scharf abgebildeten Zielmarkierung (5) erfolgt.

11. Verfahren nach Anspruch 9 oder 10, dadurch gekennzeichnet, daß die Bestimmung der Schärfe und gegebenenfalls der Größe des Bildes durch eine Auswertung der Ortsfrequenz Anteile der transformierten Grauabstufungen erfolgt.

12. Vorrichtung zur Durchführung des Verfahrens nach einem der Ansprüche 1 bis 11, dadurch gekennzeichnet, daß die Zielmarkierungen (5) in einer festen räumlichen Anordnung zu jeweils einer Kamera (4,6,7,8) angeordnet sind und daß zwei Kameras so angeordnet sind, daß sie sich gegenseitig im Blickfeld befinden.

13. Vorrichtung nach Anspruch 12, dadurch gekennzeichnet, daß die Zielmarkierungen (5) durch geometrische Figuren mit einem definierten Schwerpunkt gebildet sind.

14. Vorrichtung nach Anspruch 13, dadurch gekennzeichnet, daß sich der Schwerpunkt der geometrischen Figuren in der optischen Achse der zugehörigen Kamera (4,6,7,8) befindet.

15. Vorrichtung nach einem der Ansprüche 12 bis 14, dadurch gekennzeichnet, daß jede Kamera (4,6,7,8) wenigstens einen ihre Optik konzentrisch umgebenden Leuchtring (5) aufweist.

16. Vorrichtung nach Anspruch 15, dadurch gekennzeichnet, daß der Leuchtring (5) durch ein lichtleitendes Rohr gebildet ist, an dessen kamerafernen Ende eine Mehrzahl von Leuchtelementen angeordnet ist.

17. Vorrichtung nach Anspruch 12, dadurch gekennzeichnet, daß jede Kamera (4,6) einen optischen Strahler (10,11) in einer fixierten räumlichen Anordnung und eine im Blickfeld der Kamera (4,6) angeordnete Mattscheibe (12,13) aufweist, die von dem optischen Strahler (10,11) der anderen Kamera (4,6) zur Abbildung der Zielmarkierung angestrahlt wird.

18. Vorrichtung nach einem der Ansprüche 12 bis 17, gekennzeichnet, durch eine Station (2) mit zwei miteinander verbundenen Kameras (6,7), deren Blickfelder mit derselben optischen Achse in entgegengesetzten Richtungen ausgerichtet sind und die sich jeweils bei einer ihr zugeordneten, entfernten und in ihrem Blickfeld befindlichen Kamera (4,8) im Blickfeld befinden.

19. Vorrichtung nach einem der Ansprüche 12 bis 18, dadurch gekennzeichnet, daß wenigstens eine Kamera (4,6,7,8) bezüglich wenigstens eines Winkels verstellbar ist und daß der Verstellwert elektrisch erfaßbar und in die Bildauswertung übernehmbar ist.

## Claims

1. Method for the determination of the position of a measuring point relative to a reference point, in particular for controlling and/or monitoring the rate of advance of a bore hole, with the use of at least two cameras (4, 6, 7, 8) and at least two sight markings (5), by analysis of the picture contents of the cameras (4, 6, 7, 8), characterised in that the sight markings (5) are arranged in a fixed spatial arrangement relative to the individual cameras (4, 6, 7, 8) and possess a defined geometric structure and that the cameras (4, 6, 7, 8) are so arranged that two of them are located in each other's field of vision and the geometric position in relation to each other is determined by analysis of the particular geometric structure depicted.

2. Method according to claim 1, characterised in that the determination of the vector connecting the measurement point with the reference point takes place by analysis of the distortions of the images of the sight markings (5) if the centres of their images lie outside the optical axis of the recording camera (4, 6, 7, 8).

3. Method according to claim 1, characterised in that there is determined from the image of the geometric structure of the sight marking (5;10,11) a measurement point which is used for the determination of the vector r₁ and r₂ pointing from the reference point to the sight marking.

4. Method according to claim 3, characterised in that the measurement point is determined by determining a centre of the image of the sight marking.

5. Method according to claim 3 or 4, characterised in that for the determination of the measurement point only picture elements are used whose grey scale values lie in a pre-selected range.

6. Method according to claim 5, characterised in that the determination of the measurement point is carried out for different grey scale value ranges.

7. Method according to one of claims 1 to 6, characterised in that the position of a measurement point relative to a reference point is in the case of a curved bore hole carried out by a multiple position determination in a polygon course.

8. Method according to one of claims 1 to 7, characterised in that in addition a distance measurement is carried out.

9. Method according to one of claims 1 to 7, characterised in that a distance measurement is carried out by an analysis of the depiction conditions for the sharply depicted sight marking (5).

10. Method according to claim 9, characterised in that the distance measurement takes place by an analysis of the size of the sharply depicted sight marking (5).

11. Method according to claim 9 or 10, characterised in that the determination of the sharpness and optionally the size of the image takes place by an analysis of the spatial frequency components of the transformed grey scale gradations.

12. Apparatus for carrying out the method according to one of claims 1 to 11, characterised in that the sight markings (5) are arranged in a fixed spatial arrangement relative to the individual cameras (4, 6, 7, 8) and that two cameras are so arranged that they are located in each other's field of vision.

13. Apparatus according to claim 12, characterised in that the sight markings (5) are formed by geometric figures with a defined centre.

14. Apparatus according to claim 13, characterised in that the centre of the geometric figures is located in the optical axis of the associated camera (4, 6, 7, 8).

15. Apparatus according to one of claims 12 to 14, characterised in that each camera (4, 6, 7, 8) comprises at least one luminous ring (5) surrounding concentrically its lens system.

16. Apparatus according to claim 15, characterised in that the luminous ring (5) is formed by a light-conducting tube at whose camera-remote end a plurality of luminous elements are arranged.

17. Apparatus according to claim 12, characterised in that each camera (4, 6) comprises an optical emitter (10, 11) in a fixed spatial arrangement and a dull disc (12, 13) arranged in the field of vision of the camera (4, 6) which is irradiated by the optical emitter (10, 11) of the other camera (4, 6) for the depiction of the sight marking.

18. Apparatus according to one of claims 12 to 17, characterised by a station (2) with two mutually connected cameras (6, 7) whose fields of vision are aligned with the same optical axis in opposite directions and which are each located in the field of vision of a remote camera (4, 8) assigned to them and situated in their field of vision.

19. Apparatus according to one of claims 12 to 18, characterised in that at least one camera (4, 6, 7, 8) is adjustable in respect of at least one angle and that the adjustment value can be recorded electrically and included in the picture analysis.

## Revendications

1. Procédé de détermination de la position d'un point de mesure par rapport à un point de référence, en particulier pour la commande et/ou le contrôle de l'avancement d'un forage, grâce à l'emploi d'au moins deux caméras (4, 6, 7, 8) et d'au moins deux repères de visée (5) par analyse du contenu des images des caméras (4, 6, 7, 8), caractérisé en ce que les repères de visée (5) occupent chacun dans l'espace une position fixe par rapport à une des caméras (4, 6, 7, 8) et présentent une structure géométrique définie et en ce que les caméras (4, 6, 7, 8) sont disposées de telle façon que deux se trouvent toujours dans le champ de vision l'une de l'autre et en ce qu'on détermine la position géométrique relative par analyse de l'image de la structure géométrique représentée correspondante.

2. Procédé suivant la revendication 1, caractérisé en ce que la détermination du vecteur reliant le point de mesure au point de référence s'effectue par analyse des déformations des images des repères de visée (5), lorsque les centres de gravité de leurs images se trouvent hors de l'axe optique de la caméra (4, 6, 7, 8) enregistrant l'image.

3. Procédé suivant la revendication 1, caractérisé en ce qu'à partir de l'image de la structure géométrique de la cible de visée (5 ; 10, 11), on détermine un point, qui sert à déterminer chacun des vecteurs r₁ et r₂ reliant le point de référence à la cible de visée.

4. Procédé suivant la revendication 3, caractérisé en ce qu'on obtient le point de mesure par détermination du centre de gravité de l'image de la cible de visée.

5. Procédé suivant la revendication 3 ou 4, caractérisé en ce que pour la détermination du point de mesure, on n'emploie que des points d'image dont les valeurs de gris se trouvent dans une plage prédéfinie.

6. Procédé suivant la revendication 5, caractérisé en ce qu'on effectue la détermination du point de mesure pour plusieurs plages de valeurs de gris.

7. Procédé suivant l'une quelconque des revendications 1 à 6, caractérisé en ce que dans le cas d'un forage courbe, on détermine la position d'un point de mesure par rapport à un point de référence par de multiples déterminations de position suivant un polygone.

8. Procédé suivant l'une quelconque des revendications 1 à 7, caractérisé en ce qu'on effectue en plus une mesure de distance.

9. Procédé suivant l'une quelconque des revendications 1 à 7, caractérisé en ce qu'on effectue une mesure de distance par analyse des caractéristiques de l'image nette de la cible de visée (5).

10. Procédé suivant la revendication 9, caractérisé en ce qu'on effectue une mesure de distance par analyse de la grandeur de l'image nette de la cible de visée (5).

11. Procédé suivant la revendication 9 ou 10, caractérisé en ce qu'on effectue la détermination de la netteté et le cas échéant de la grandeur de l'image par analyse des contributions des fréquences de lieu des échelles de gris transformées.

12. Dispositif pour mise en oeuvre du procédé suivant l'une quelconque des revendications 1 à 11, caractérisé en ce que les cibles de visée (5) occupent chacun une position fixe par rapport à une caméra (4, 6, 7, 8) et en ce que deux caméras sont disposées de telle façon qu'elles se trouvent chacune dans le champ de vision l'une de l'autre.

13. Dispositif suivant la revendication 12, caractérisé en ce que les cibles de visée (5) sont constituées de figures géométriques possédant un centre de gravité défini.

14. Dispositif suivant la revendication 13, caractérisé en ce que le centre de gravité des figures géométriques se trouve sur l'axe optique de la caméra correspondante (4, 6, 7, 8).

15. Dispositif suivant l'une quelconque des revendications 12 à 14, caractérisé en ce que chaque caméra (4, 6, 7, 8) comporte au moins un anneau lumineux (5) entourant son optique de manière concentrique.

16. Dispositif suivant la revendication 15, caractérisé en ce que l'anneau lumineux (5) est constitué d'un tube conduisant la lumière, à l'extrémité duquel qui est éloignée de la caméra sont disposés plusieurs éléments lumineux.

17. Dispositif suivant la revendication 12, caractérisé en ce que chaque caméra (4, 6) présente une source de rayonnement optique (10, 11) occupant un emplacement fixe par rapport à la caméra (4, 6) et une vitre dépolie (12, 13) disposée dans le champ de vision de la caméra (4, 6), qui reçoit le rayonnement de la source de rayonnement optique (10, 11) de l'autre caméra (4, 6) afin de former la cible de visée.

18. Dispositif suivant l'une quelconque des revendications 12 à 17, caractérisé par une station (2) comportant deux caméras (6, 7) fixées l'une à l'autre, dont les champs de vision sont orientés suivant le même axe optique dans des directions opposées et dont chacune se trouve dans le champ de vision d'une caméra éloignée (4, 8) qui lui est attribuée, se trouvant dans son champ de vision.

19. Dispositif suivant l'une quelconque des revendications 12 à 18, caractérisé en ce qu'au moins une caméra (4, 6, 7, 8) peut pivoter autour d'au moins un angle et que l'angle de rotation peut être déterminé électriquement et qu'il peut en être tenu compte dans l'analyse de l'image.
